# EUROPÄISCHE PATENTANMELDUNG

(11) **EP 4 284 012 A1**
(43) Veröffentlichungstag der Anmeldung: **29.11.2023**
(21) Anmeldenummer: 23174881.5
(22) Anmeldetag: 23.05.2023
(51) Int. Cl.: H04N 23/66, H04N 23/695, G03B 37/00, G01N 21/954

(54) **VERFAHREN ZUR STEUERUNG EINER KAMERA EINES KANALROHRINSPEKTIONSGERÄTES**

(30) Priorität: 24.05.2022 DE 102022205182
(71) Anmelder: IBAK Helmut Hunger GmbH & Co. KG, 24148 Kiel (DE)
(72) Erfinder: Böttcher, Marcus, 24148 Kiel (DE); Ries, Bodo, 24148 Kiel (DE)
(74) Vertreter: Patentanwälte Vollmann Hemmer Lindfeld Partnerschaft mbB

(57) **Zusammenfassung**

Ein Verfahren zur Steuerung eines Kanalrohrinspektionsgerätes mit einer Kamera (8) mit folgenden Schritten:
a) Auswählen eines Bildobjektes (A) in einem von der Kamera (8) im Inneren eines Kanalrohres (4) in einer ersten Blickrichtung (B₁) aufgenommenen Bildes (30),
b) Ermitteln, um welches Maß (m) das Bildobjekt (A) in dem Bild (30) von einem gewünschten Zielbildbereich (Z) entfernt ist,
c) Bestimmen zumindest eines Bewegungspfades (32), um welchen die Blickrichtung (B) der Kamera (8) ausgehend von der ersten Blickrichtung (Bi) verändert muss, und/oder zumindest eines Bewegungspfades, um welchen das Bildobjekt (A) bewegt werden muss, um das Bildobjekt (A) in den Zielbildbereich (Z) zu bewegen,
d) Verändern der Blickrichtung (B) zu einer zweiten Blickrichtung (B₂), wobei die Blickrichtung (B) ausgehend von der ersten Blickrichtung (Bi) um den bestimmten Bewegungspfad (32) verändert wird, und/oder Bewegen des Bildobjektes (A) um den bestimmten Bewegungspfad,
e) Wiederauffinden des Bildobjektes (A) in einem erneut aufgenommenen Bild (30),
f) Wiederholen der Schritte b) bis e) bis das Maß (m), um welches das Bildobjekt (A) von dem Zielbildbereich (Z) entfernt ist, einen vorbestimmten Grenzwert unterschreitet.
Ein Kanalrohrinspektionsgerät, welches zur Ausführung des Verfahrens ausgebildet ist.

## Beschreibung

Die Erfindung betrifft ein Verfahren zur Steuerung eines Kanalrohrinspektionsgerätes sowie ein Kanalrohrinspektionsgerät.

Kanalrohrinspektionsgeräte werden eingesetzt, um Kanalrohre und/Schächte auf Beschädigungen und andere Fehler zu überprüfen und ggf. Reparaturen im Kanalrohr/Schacht durchführen zu können. Dazu werden Kanalrohrinspektionsgeräte durch das Kanalrohr bewegt, z.B. gefahren, gezogen und/oder geschoben. Diese Geräte sind üblicherweise mit Kameras ausgestattet, deren Blickrichtung sich verändern lässt, um alle Bereiche des Kanalrohrs aus der Ferne betrachten zu können. Dabei ist es häufig schwierig, die Kamera richtig zu positionieren, um bestimmte Stellen in Kanalrohren gut in den Blick nehmen zu können, insbesondere, wenn das Kanalrohrinspektionsgerät gleichzeitig in Bewegung ist.

Häufig ist es wünschenswert, dass eine bestimmte Stelle, welche in einem Bild ausgewählt wird, in die Bildmitte bewegt wird und in der Bildmitte verbleibt, um sie dort besser betrachten zu können. Dies kann beispielsweise durch ein Verschwenken der Kamera geschehen. Hierbei ergeben sich verschiedene Schwierigkeiten, welche z. B. daraus resultieren können, dass die Kamera gleichzeitig eine Zoomfunktion aufweist, dass es zum Rand des Bildes hin Linsenverzeichnungen gibt und beispielsweise, dass der Dreh- und Schwenkpunkt der Kamera nicht im Projektionszentrum gelegen ist.

Vor dem Hintergrund dieser Schwierigkeiten ist es Aufgabe der Erfindung, ein Verfahren zur Steuerung eines Kanalrohrinspektionsgerätes sowie ein entsprechendes Kanalrohrinspektionsgerät bereitzustellen, welche es auf einfache Weise ermöglichen, zuverlässig ein gewünschtes Bildobjekt in einen bestimmten Bereich des von der Kamera aufgenommenen Bildes zu bewegen bzw. die Blickrichtung der Kamera so zu ändern, dass das Bildobjekt im gewünschten Bereich des Bildes gelegen ist.

Diese Aufgabe wird gelöst durch ein Verfahren mit den im Anspruch 1 angegebenen Merkmalen sowie durch ein Kanalrohrinspektionsgerät mit den in Anspruch 14 angegebenen Merkmalen. Bevorzugte Ausführungsformen ergeben sich aus den zugehörigen Unteransprüchen sowie der nachfolgenden Beschreibung.

Das erfindungsgemäße Verfahren dient zur Steuerung eines Kanalrohrinspektionsgerätes, d. h. der Steuerung eines Inspektionsgerätes und vorzugsweise einer an diesem angeordneten Kamera bei der Inspektion eines Kanalrohres. Unter Kanalrohrinspektionsgerät im Sinne dieser Anmeldung ist eine Inspektionsgerät zum Inspizieren und/oder Bearbeiten von Rohren und/oder Schächten, insbesondere von Rohren und/oder Schächten eines Kanalsystems zu verstehen. Das Kanalrohrinspektionsgerät kann dabei in bekannter Weise beispielsweise als im Kanalrohr oder Schacht durch Vorschubmittel bewegbares Inspektionsgerät, zum Beispiel als Fahrwagen oder als über einen Schiebestab vorschiebbares Inspektionsgerät mit einer Kamera ausgebildet sein. Dabei ist die Kamera an dem Kanalrohrinspektionsgerät vorzugsweise bewegbar gelagert oder weist selber Positioniereinrichtungen auf, welche es möglich machen, das Blickfeld der Kamera zu ändern, um verschiedene Bereiche des Kanalrohrs betrachten zu können, insbesondere im Bereich einer Umfangswandung des Rohres. Neben der Kamera kann auch ein bewegbares Werkzeug vorgesehen sein. Alternativ oder zusätzlich kann auch das ganze Inspektionsgerät derart bewegbar ausgebildet sein, insbesondere im Kanalrohr oder Schacht drehbar sein, um die Blickrichtung der Kamera und/oder die Positionierung eines Werkzeuges zu verändern.

Das erfindungsgemäße Verfahren weist mehrere Schritte auf. In einem ersten Schritt wird in einem von der Kamera im Inneren des Kanalrohres in einer ersten Blickrichtung aufgenommenen Bild ein Bildobjekt ausgewählt. Dies kann automatisiert oder manuell durch eine Bedienperson erfolgen. Das Bildobjekt wird dabei in geeigneter Weise markiert, d. h. insbesondere in einer Kamerasteuereinrichtung als ausgewählt gekennzeichnet. Das Bildobjekt kann beispielsweise eine Abbildung eines Objektes an der Wandung des Kanalrohres, z.B. eine Beschädigung oder eine Abzweigöffnung, oder eines im Kanalrohr befindlichen Objektes, z.B. auch eines Werkzeuges sein.

In einem darauffolgenden Schritt wird ermittelt, um welches Maß bzw. welchen Abstand das ausgewählte Bildobjekt in dem Bild von einem gewünschten Zielbildbereich entfernt ist. Der Zielbildbereich kann dabei beispielsweise die Bildmitte oder aber auch ein Bereich, in welchem ein Element zu positionieren ist, sein. So kann das Maß beispielsweise den Abstand des Bildobjektes von der Bildmitte bezeichnen. Beispielsweise kann das Maß auch dem Abstand eines Werkzeuges von einem zu bearbeitenden Bereich entsprechen. Erfindungsgemäß ist angestrebt, das Bildobjekt in den Zielbildbereich zu bewegen bzw. den Zielbildbereich so zu verlagern, dass das Bildobjekt im Zielbildbereich, beispielsweise der Bildmitte, gelegen ist. Dazu wird in einem nächsten Schritt zumindest ein Bewegungspfad bestimmt, um welchen die Blickrichtung der Kamera verändert werden muss, und/oder das Bildobjekt bewegt werden muss, um das Bildobjekt in den Zielbildbereich zu bewegen. Dies können auch überlagerte Bewegungen bzw. überlagerte Bewegungspfade beispielsweise der Kamera und eines beobachteten Bildobjektes sein. Zum Beispiel kann das Bildobjekt ein bewegbares Werkzeug sein. Die Blickrichtung kann beispielsweise als die zentrale Achse des Blick- bzw. Sichtfeldes definiert sein. Dabei berechnet sich der Bewegungspfad ausgehend von der ersten Blickrichtung, in welcher das Bild aufgenommen wurde, in welchem das Bildobjekt ausgewählt wird. Nach Bestimmen des Bewegungspfades oder der Bewegungspfade wird die Blickrichtung von der ersten Blickrichtung zu einer zweiten Blickrichtung hin verändert, wobei die Veränderung der Blickrichtung in dem zuvor bestimmten Bewegungspfad bzw. um den zuvor bestimmten Bewegungspfad durchgeführt wird. Alternativ oder zusätzlich wird das beobachtete Objekt bzw. Bildobjekt um einen bestimmten Bewegungspfad bewegt. D. h. die Blickrichtung wird beispielsweise um das zuvor bestimmte Maß, um welches das Bildobjekt von dem Zielbildbereich beabstandet ist in der entsprechenden Richtung des Abstandes verlagert. Entsprechend könnte zum Beispiel ein Werkzeug um ein bestimmtes Maß bewegt werden, um eine bestimmte Position, welche dem Zielbildbereich entspricht, zu erreichen.

In einem im Anschluss erneut aufgenommen Bild, d.h. Zum Beispiel dem nun in der zweiten Blickrichtung aufgenommenen Bild, wird im darauffolgenden Schritt das vorangehend ausgewählte Bildobjekt wieder aufgefunden. Dies erfolgt vorzugsweise automatisiert durch ein Bildauswertungs- bzw. Bilderkennungssystem. Nach dem Wiederauffinden des Bildobjektes wird erneut das Maß von dem Bildobjekt zum gewünschten Zielbildbereich ermittelt und es wird für den Fall, dass dieses Maß nicht unter einem vorbestimmten Grenzwert liegt, der Verfahrensablauf in der Weise wiederholt, dass erneut zumindest ein Bewegungspfad bestimmt wird und die Blickrichtung und/oder ein beobachtetes Objekt entlang dieses Bewegungspfades verlagert wird. D. h. erfindungsgemäß werden in einem iterativen Verfahren die Blickrichtung der Kamera und/oder die Position eines beobachteten Objektes so oft geändert, bis ein ausgewähltes Bildobjekt im Zielbildbereich oder im Wesentlichen im Zielbildbereich gelegen ist, was dadurch definiert ist, dass ein verbleibender Abstand unter einem vorbestimmten Grenzwert bzw. Minimum liegt. Der beschriebene Verfahrensablauf kann dabei auch mehr als zweimal, d. h. so lange mehrfach wiederholt werden, bis das bestimmte Maß unter dem vorbestimmten Grenzwert liegt. So kann das erfindungsgemäße Verfahren auch Lageänderungen, die während des Verfahrensablaufes auftreten durch wiederholten Verfahrensdurchlauf kompensieren und auf sehr einfache Weise iterativ die Blickrichtung der Kamera so verlagern, dass ein gewünschtes Bildobjekt im Zielbildbereich, beispielsweise in der Mitte des Bildes gelegen ist und verbleibt. Dieses Verfahren eignet sich somit bevorzugt, um bestimmte Bildobjekte genauer betrachten zu können, Bildobjekte bei der Bewegung des Inspektionsgerätes nachverfolgen zu können oder auch um Werkzeuge an gewünschte Positionen zu bewegen.

Das beschriebene Maß zwischen dem Bildobjekt und dem gewünschten Zielbildbereich kann Längenmaß im Bild, z.B. ein Abstand in Pixeln, oder auch ein Winkel zwischen der Blickrichtung, in welcher das Bildobjekt gelegen ist und der Blickrichtung, in welcher der Zielbildbereich gelegen ist, sein. Die Verwendung von Winkeln eignet sich insbesondere dann, wenn die Kamera um eine oder mehrere Schwenkachsen schwenkbar ist, da aus den Winkeln direkt die gewünschten Schwenkwinkel abgeleitet werden können. Alternativ kann das Maß jedoch zunächst ein Längenmaß sein und es können die erforderlichen Bewegungen der Kamera, beispielsweise auch Schwenkbewegungen um Schwenkachsen hieraus abgeleitet werden, um in der Bildebene eine Bewegung um ein entsprechendes Längenmaß, z.B. um eine entsprechende Pixelanzahl zu erreichen.

So ist vorzugsweise auch der Bewegungspfad als zumindest eine Strecke oder zumindest ein Schwenkwinkel definiert, welcher vorzugsweise gleichzeitig der Schwenkwinkel um eine Schwenkachse der Kamera ist. Der Schwenkwinkel kann jedoch auch ein resultierender Winkel sein, welcher durch Bewegungen entlang mehrerer Achsen bzw. Schwenkbewegungen um mehrere Achsen realisiert wird. Genauso ist es möglich, dass der Bewegungspfad zunächst als eine Strecke in der Bildebene definiert wird, aus welcher dann die erforderlichen Bewegungen der Kamera und/oder eines Objektes, insbesondere Schwenkbewegungen entlang der verschiedenen möglichen Bewegungsachsen bzw. um die vorhandenen Schwenkachsen abgeleitet wird. Ferner kann der Bewegungspfad auch eine Linearbewegung der Kamera und/oder eines Objektes umfassen.

Die Blickrichtung wird vorzugsweise durch Verschwenken der Kamera um eine oder mehrere Schwenkachsen verändert. Insofern ist es bevorzugt, dass die Schwenkbewegungen um die vorhandenen Schwenkachsen aus einer den Bewegungspfad definierenden Strecke in der Bildebene abgeleitet werden oder direkt aus einem Winkel, welcher das Maß zwischen dem Bildobjekt und dem Zielbildbereich definiert, berechnet werden. Anstatt die Kamera relativ zu einem Inspektionsgerät zu verschwenken oder zu bewegen, könnte sich entsprechend auch das ganze Inspektionsgerät mit der Kamera bewegen, d.h. linear bewegen und/oder drehen.

Anstelle einer tatsächlichen mechanischen Bewegung der Kamera könnte eine Veränderung der Blickrichtung auch rein virtuell durch Verändern eines Ausschnittes in einem von der Kamera erfassten größeren Gesamtbild realisiert werden. Eine solche virtuelle Verlagerung der Blickrichtung kann anstelle eines mechanischen Verschwenkens der Kamera oder zusätzlich erfolgen. Beispielsweise wäre es möglich, ein Verschwenken bzw. Bewegen in einigen Richtungen mechanisch und in anderen Richtungen virtuell zu erzeugen.

Das Auswählen des Bildobjektes in einem Bild, insbesondere dem in der ersten Blickrichtung aufgenommenen Bild, kann durch manuelles Markieren erfolgen, beispielsweise indem eine Bedienperson einen Zeiger oder Cursor im dargestellten Bild auf das gewünschte Bildobjekt bewegt oder dieses in anderer Weise virtuell im Bildverarbeitungssystem markiert oder kenntlich macht. Alternativ oder zusätzlich kann ein automatisiertes Auswählen des Bildobjektes möglich sein, beispielsweise durch Erkennen einer vorgegebenen Bildstruktur. Dies kann beispielsweise durch künstliche Intelligenz und durch Anlernen eines Computersystems erfolgen. Alternativ oder zusätzlich können Beispiele für zu erkennende Bildstrukturen in einer Datenbank hinterlegt sein und die dort hinterlegten Strukturen dann mit aktuell aufgenommenen Bildern verglichen werden. Grundsätzlich können in einem elektronischen Bildverarbeitungssystem alle geeigneten Verfahren Verwendung finden, um ein Bildobjekt automatisiert zu identifizieren.

Gemäß einer weiteren bevorzugten Ausführungsform erfolgt das Auswählen und/oder Wiederauffinden des zuvor erkannten Bildobjektes automatisiert durch Bildauswertung, beispielsweise Featurematching, Object-Tracking und/oder zumindest ein Verfahren künstlicher Intelligenz, welches insbesondere zur Verfolgung (Tracking) und/oder Wiedererkennung (Re-Identification) von Bildbereichen geeignet ist. Grundsätzlich kann jedes zum Erkennen und Wiedererkennen von Objekten oder Strukturen in einem Bild geeignete Verfahren eingesetzt werden. Dazu weist ein entsprechendes Bildauswertungssystem geeignete Algorithmen auf, um das Bildobjekt auszuwählen oder wiederzuerkennen und dann vorzugsweise ebenfalls automatisiert das Maß bzw. den Abstand zwischen dem Bildobjekt und dem Zielbildbereich zu bestimmen. Zum automatisierten Bestimmen des Maßes wird weiter bevorzugt ein Referenzpunkt, z.B. ein Mittelpunkt oder Mittelbereich des ausgewählten Bildobjektes definiert, dessen Abstand von einem Punkt, welcher den Zielbildbereich definiert, errechnet bzw. bestimmt wird.

Die Kamera ist gemäß einer bevorzugten Ausführungsform an einer Vorschubeinrichtung angeordnet, beispielsweise einem vorschiebbaren Schiebestab oder einem Fahrwagen, wobei zum Verändern der Blickrichtung zumindest ein Teil der Vorschubeinrichtung oder die ganze Vorschubeinrichtung bewegt wird. Hierdurch kann z.B. auch eine Linearbewegung der Kamera in dem Kanalrohr erreicht werden, um die Blickrichtung zu verändern. Wenn beispielsweise in einer Blickrichtung schräg nach vorne ein Objekt an der Rohrwandung erkannt wird, welches vor der Kamera liegt, kann über die Vorschubeinrichtung die Kamera so weit vorgeschoben werden, dass das gewünschte Bildobjekt im Umfangsbereich der Kanalrohrinspektionseinrichtung gelegen ist, so dass dann durch Verschwenken der Kamera in eine radiale Blickrichtung das gewünschte Bildobjekt frontal betrachtet werden kann, d. h. die Blickrichtung vorzugsweise normal auf die Oberfläche mit der zu betrachtenden Struktur, welche das Bildobjekt bildet, gerichtet ist. So kann eine Vorschubbewegung Teil der zur Veränderung der Blickrichtung erforderlichen Bewegung sein. Je nach Ausgestaltung der Vorschubeinrichtung, kann diese sich auch als Ganzes drehen oder verschwenken. Ein Vorschubantrieb der Vorschubeinrichtung kann weiter bevorzugt von einer Steuereinrichtung, welche auch die Bildauswertung und das zuvor beschriebene Verfahren ausführt, angesteuert werden, um eine gewünschte Vorschubbewegung zu realisieren.

Gemäß einer weiteren möglichen Ausgestaltung kann die Kamera an einer Positioniereinrichtung angebracht sein, mittels welcher sich die Blickrichtung der Kamera um zumindest eine, vorzugsweise zwei oder drei Schwenkachsen verändern lässt. Dies können weiter bevorzugt Schwenkachsen mit Schwenkantrieben sein, wobei die Schwenkantriebe von einer Steuereinrichtung, welche das beschriebene Verfahren ausführt, ansteuerbar sind, um die gewünschten Änderungen der Blickrichtung entlang dem erforderlichen Bewegungspfad zu veranlassen. Vorzugsweise sind eine oder zwei Schwenkachsen normal zur Bildachse der Kamera gerichtet. Alternativ oder zusätzlich können zwei Schwenkachsen normal zueinander gerichtet sein. Besonders bevorzugt ist eine Positioniereinrichtung vorgesehen, welche ein Verschwenken um mindestens drei Schwenkachsen ermöglicht.

Gemäß einer weiteren möglichen Ausgestaltung kann eine Schwenkachse entlang der Blickachse der Kamera gerichtet sein. So ist es möglich, das Bild in der Bildebene um die Blickachse zu drehen, um das Bild lagerichtig zu halten.

Die Schwenkachsen können, wie beschrieben als mechanische Schwenkachsen mit entsprechenden Antrieben ausgebildet sein. Alternativ ist es auch möglich, eine oder mehrere Schwenkachsen als virtuelle Schwenkachsen zu realisieren. So ist vorzugsweise zumindest eine Schwenkachse eine virtuelle Schwenkachse, welche durch eine Veränderbarkeit eines Ausschnittes aus einem Gesamtbild realisiert wird. D. h. hierzu wird die Kamera selber nicht bewegt, es wird lediglich der Bildausschnitt in dem von der Kamera aufgenommenen Bild verändert und der veränderte Bildausschnitt einem Benutzer zur Anzeige gebracht und/oder von einer Bildverarbeitungseinrichtung ausgewertet.

Die oben beschriebenen Verfahrensschritte können gemäß einer besonderen Ausgestaltung der Erfindung durchgeführt werden, während die Kamera mittels einer Vorschubeinrichtung bewegt wird. Dies ermöglicht bevorzugt eine Lagekorrektur im Wesentlichen in Echtzeit, so dass bei der Vorschubbewegung der Kamera ein gewünschtes bzw. ausgewähltes Bildobjekt in dem gewünschten Zielbildbereich gehalten werden kann. So kann beispielsweise die Kamera beim Vorschub verschwenkt werden, um das Kamerabild nachzuführen. Wie oben bereits beschrieben kann beispielsweise die Kamera in linearer Richtung vorgeschoben werden und gleichzeitig weiter in radialer Richtung verschwenkt werden, so dass ein an der Rohrwandung in Vorschubrichtung vor der Kamera gelegener Punkt an der Innenwandung des Kanalrohrs auch beim Vorschub der Kamera im Bild verbleibt. Neben der Bewegung der Kamera könnte auch ein beobachtetes Objekt, beispielsweise ein Werkzeug bewegt werden, welche auch gemeinsam mit der Kamera an derselben Vorschubeinrichtung angeordnet sein könnte. So ist es möglich, das Werkzeug gezielt an einen zu bearbeitenden Bereich zu bewegen und/oder einer definierten Position zu halten.

Gemäß einer möglichen Variante des erfindungsgemäßen Verfahrens könnte nach Erreichen des Zielbildbereiches, d.h. wenn das Maß den vorbestimmten Grenzwert unterschreitet, automatisiert eine Aktion gestartet oder zum Start angeboten werden. Dies könnte beispielsweise die Aktivierung eines Werkzeuges, z.B. eines Fräsers sein, oder es könnte eine Kamera oder das Inspektionsgerät als Ganzes in einen Abzweig vorgeschoben werden, welcher im Zielbildbereich liegt.

Neben dem vorangehend beschriebenen Verfahren ist Gegenstand der Erfindung ein Kanalrohrinspektionsgerät, welches zur Inspektion und/oder Bearbeitung von Kanalrohren und/oder Schächten geeignet ist. Das bedeutet, unter einem Kanalrohrinspektionsgerät im Sinne dieser Anmeldung ist auch ein Schachtinspektionsgerät zu verstehen. Das Kanalrohrinspektionsgerät weist eine Vorschubeinrichtung und eine an diese angeordnete Kamera auf, deren Blickrichtung durch Bewegung der Kamera und/oder der Vorschubeinrichtung veränderbar ist. Die Vorschubeinrichtung kann beispielsweise eine Vorschubeinrichtung mit einem Schiebestab oder ein Fahrwagen, oder im Falle eines Schachtinspektionsgerät z.B. auch eine Winde mit Seil zum Herablassen des Inspektionsgerätes sein. Die Veränderung der Blickrichtung kann durch entsprechende Schwenk- bzw. Bewegungsachsen und Antriebe erreicht werden, welche von einer Steuereinrichtung angesteuert werden können. Dies kann automatisiert und/oder manuell durch eine Bedienperson veranlasst werden. Das Kanalrohrinspektionsgerät weist ferner eine Steuereinrichtung auf bzw. ist mit einer Steuereinrichtung verbunden, welche derart ausgebildet ist, dass sie das Verfahren, wie es vorangehend beschrieben wurde, ausführt bzw. ausführen kann. Die Steuereinrichtung kann insbesondere eine Kamerasteuereinrichtung aufweisen, welche die Kamera steuert und zur Ausführung des Verfahrens ausgebildet ist. Es ist zu verstehen, dass oben im Zusammenhang mit dem Verfahren beschriebene vorteilhafte Ausgestaltungen insofern ebenfalls Gegenstand des erfindungsgemäßen Kanalrohrinspektionsgerätes sind. Umgekehrt sind bevorzugte Ausgestaltungen, welche nachfolgend in Bezug auf das Kanalrohrinspektionsgerät beschrieben werden, ebenfalls als bevorzugte Ausgestaltungen des erfindungsgemäßen Verfahrens zu verstehen.

Die Steuereinrichtung weist gemäß einer bevorzugten Ausführungsform zumindest eine Anzeigeeinrichtung auf, welche ein von der Kamera aufgenommenes Bild anzeigt. Dies kann ein übliches Computer- oder Videodisplay sein, welches einer Bedienperson das von der Kamera aufgenommene Bild bzw. einen gewählten Bildausschnitt zur Anzeige bringt.

Weiter bevorzugt kann die Steuereinrichtung zumindest eine Eingabevorrichtung aufweisen, welche es einer Bedienperson ermöglicht Eingabebefehle einzugeben und insbesondere auch ein Bildobjekt, wie es oben beschrieben wurde zu Beginn des Verfahrens auszuwählen. Die Eingabevorrichtung kann in üblicher Weise, beispielsweise als Tastatur, Maus, Trackpad und/oder auch als Touchsreen in Kombination mit der Anzeigeeinrichtung ausgebildet sein.

Gemäß einer weiteren alternativen oder zusätzlichen Ausgestaltung kann die Steuereinrichtung ein Bilderkennungsmodul ausweisen, welches die Auswahl eines Bildobjektes ermöglicht, insbesondere eine automatisierte Auswahl, wie sie oben beschrieben wurde. So kann beispielsweise das Bilderkennungsmodul so programmiert oder ausgestaltet sein, dass es selbsttätig im Bild Risse oder Beschädigungen einer Rohrwandung erkennen kann. Dies kann mit Hilfe künstlicher Intelligenz, neuronaler Netze oder ähnlicher Systeme zur Bildauswertung geschehen.

Die Kamera weist bevorzugt zumindest zwei, vorzugsweise zumindest drei Schwenkachsen auf, um welche das von der Kamera aufgenommene Bild schwenkbar ist. Wie oben beschrieben können dies mechanische Schwenkachsen mit Schwenkantrieben sein, welche von einer Steuereinrichtung, insbesondere der Kamerasteuereinrichtung angesteuert werden. Alternativ oder zusätzlich können virtuelle Schwenkachsen vorhanden sein, welche bevorzugt in der Steuereinrichtung bzw. Kamerasteuereinrichtung implementiert ist, wobei in der oben beschriebenen Weise die Blickrichtung durch Verändern eines Bildausschnittes in einem von der Kamera aufgenommenen Gesamtbild verändert wird. So kann zumindest eine der Schwenkachsen als eine virtuelle Schwenkachse realisiert sein.

Die Kamera ist gemäß einer bevorzugten Ausführungsform an einer Positioniereinrichtung angebracht, wobei die Positioniereinrichtung zumindest eine Schwenkachse mit einem von der Steuereinrichtung ansteuerbaren Schwenkantrieb aufweist. Dies kann beispielsweise eine Schwenkachse sein, welche sich normal zur Vorschubrichtung erstreckt. Alternativ oder zusätzlich kann dies eine Schwenkachse sein, welche sich parallel zur Vorschubrichtung der Vorschubeinrichtung erstreckt. Eine solche Anordnung von Schwenkachsen ermöglicht es, z. B. die Blickrichtung von einer Blickrichtung nach vorne in eine Umfangsrichtung, d. h. auf eine Rohrwandung gerichtet, zu verschwenken. Ferner wird es möglich, das Blickfeld in der Umfangsrichtung zu bewegen, so dass bei radialer Blickrichtung der gesamte Rohrumfang betrachtet werden kann. Zusätzlich können weitere Schwenk- oder Drehachsen, seien es mechanische oder virtuelle Schwenkachsen, vorgesehen sein, beispielsweise um das Bild um die Blickrichtung zu drehen und auf diese Weise lagerichtig zu halten.

Das erfindungsgemäße Verfahren sowie das erfindungsgemäße Kanalrohrinspektionsgerät kann bei der Kanalrohrinspektion und/oder Sanierung von Kanalrohren und/oder Schächten in verschiedenster Weise zum Einsatz gebracht werden. So wird es möglich, die Vorschubeinrichtung und die Kamera so zu steuern, dass die Kamera automatisiert einen bestimmten Bildpunkt anfährt, beispielsweise automatisiert in einen aufgefundenen Anschluss abbiegt. Ferner wäre es auch möglich, mehrere Bildobjekte auszuwählen und in der beschriebenen Weise nacheinander in einem gewünschten Zielbildbereich zu positionieren, welche dann von der Kamera bzw. einem Kanalrohrinspektionssystem angefahren werden, beispielsweise um eine Bearbeitung durchzuführen. Auch ist es möglich, sich über einen längeren Rohrverlauf erstreckende Schäden, zum Beispiel einen Riss als Streckenschaden beim Vorschub im Bild zu behalten. In einem solchen Anwendungsfall kann die Kamera um 90° Grad verschwenkt zur Rohrwandung gerichtet sein, während die Vorschubeinrichtung die Kamera in Längsrichtung des Rohres bewegt. Durch Verschwenken der Kamera um eine Achse parallel zur Vorschubrichtung kann dabei der Schaden in der Bildmitte gehalten werden, wobei der Schaden das ausgewählte Bildobjekt und die Bildmitte den Zielbildbereich darstellt.

Das Kanalrohrinspektionssystem kann auch eine Hubeinheit beinhalten, welche es ermöglicht, die Position der Kamera in Durchmesserrichtung, d. h. die Höhe der Kamera vom Boden des Kanalrohres zu variieren. Dies kann eine zusätzliche Achse sein, welche genutzt wird, das Bildobjekt in den Zielbildbereich zu bewegen. So kann der Bewegungspfad, wie bereits vorangehend beschrieben, durch Schwenkbewegungen und/oder translatorische Bewegungen der Kamera oder Veränderung eines Bildausschnittes eines von der Kamera aufgenommenen Bildes, als virtuelle Achse, realisiert sein.

Nachfolgend wird die Erfindung beispielhaft anhand der beigeführten Figuren beschrieben, in diesen zeigt:
- Fig. 1: schematisch ein Kanalrohrinspektionsgerät in einem Kanalrohr und
- Fig. 2: schematisch die Bilddarstellung.

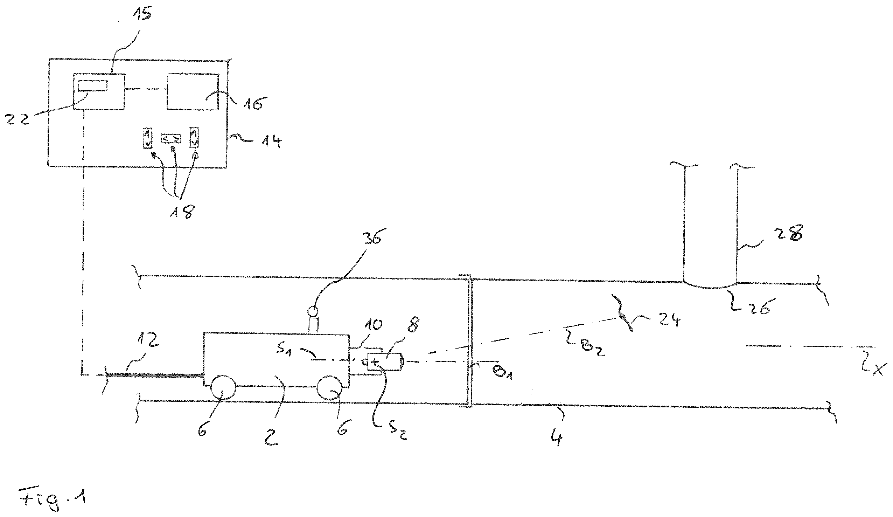

In Figur 1 ist schematisch ein Kanalrohrinspektionsgerät in Form eines Fahrwagens 2 dargestellt, welcher sich in einem Kanalrohr4 befindet. Der Fahrwagen 2 ist über seine angetriebenen Räder 6 in der Längsrichtung X des Kanalrohres 4 in diesem verfahrbar. Der Fahrwagen 2 bildet somit eine Vorschubeinrichtung für die an dem Fahrwagen 2 befestigte Kamera 8. Die Kamera 8 ist über eine Positioniereinrichtung 10 an dem Fahrwagen 2 befestigt. Die Positioniereinrichtung 10 weist angetriebene Schwenkachsen S, in diesem Beispiel zwei Schwenkachsen S₁ und S₂ auf, um welche die Kamera 8 verschwenkbar ist. Die Schwenkachse S₁ erstreckt sich dabei parallel zur Vorschubrichtung X. Die Schwenkachse S₂ ist normal zu der Schwenkachse S₁ gerichtet. Beide Schwenkachsen S₁ und S₂ weisen vorzugsweise motorische, insbesondere elektromotorische Antriebe auf. In dem in Figur 1 gezeigten Zustand ist die Kamera 8 so gerichtet, dass ihre Blickrichtung B in einer ersten Blickrichtung B₁ parallel zur Vorschubrichtung X gerichtet ist. Die Kamera 8 weist vorzugsweise eine weitere Schwenkachse auf, welche es ermöglicht, das Bild um die Achse der Blickrichtung B zu drehen, um stets eine lagerichtige Ausrichtung des Bildes sicherzustellen, auch wenn die Kamera um eine der anderen Schwenkachsen S₁, S₂ verschwenkt wird.

Der Fahrwagen 2 ist über ein Kabel 12 mit einer Steuereinrichtung 14 verbunden. Die Steuereinrichtung 14 dient zur Steuerung, insbesondere Fernsteuerung des Fahrwagens 2 mit der Kamera 8 im Kanalrohr 4, wobei die Steuereinrichtung 14 außerhalb des Kanalrohres angeordnet ist. Die Steuereinrichtung 14 beinhaltet in diesem Beispiel eine Kamerasteuereinrichtung 15 mit einer Anzeigeeinrichtung 16 in Form eines Displays. Auf der Anzeigeeinrichtung 16 wird das von der Kamera 8 aufgenommene Bild dargestellt. Ferner weisen die Steuereinrichtung 14 und die Kamerasteuereinrichtung 15 Bedienelemente 18 auf, über welche die Steuereinrichtung 14 und die Kamerasteuereinrichtung 15 von einer Bedienperson einstell- bzw. steuerbar ist. Die Kamerasteuereinrichtung 15 ist mit einem Bilderkennungsmodul 22 ausgestattet. Die Kamerasteuereinrichtung 15 und/oder das Bilderkennungsmodul 22 können eine eigene Hardwarekomponente aufweisen, aber auch vorzugsweise lediglich als Softwareapplikationen bzw. Softwaremodule in der Steuersoftware der Steuereinrichtung 14 ausgebildet sein.

Zur Inspektion des Kanalrohres 4 wir der Fahrwagen 2 in Längsrichtung X durch das Kanalrohr 4 gefahren und dabei mit der Kamera 8 die Innenwandung des Rohres und der Innenraum des Kanalrohres 4 aufgenommen. Dabei kann die Kamera 8, wie in Figur 1 gezeigt, beispielsweise zunächst nach vorne, d. h. in einer Blickrichtung B₁ parallel zur Vorschubachse X gerichtet sein. Wenn nun ein zu beobachtendes Objekt, wie in diesem Beispiel der schematisch dargestellte Riss 24 oder beispielsweise die Einmündung 26 des gezeigten Abzweiges 28, näher betrachtet werden soll, kann die Blickrichtung B durch Verschwenken der Kamera 8 und Bewegen des Fahrwagens 2 so geändert werden, dass das Bildobjekt besser betrachtet werden kann, insbesondere beispielsweise in die Mitte des Blickfeldes bewegt wird. Hierzu kann beispielsweise die Kamera 8 um die Schwenkachse S₂ so verschwenkt werden, dass die Blickrichtung B von der Blickrichtung B₁ in die Blickrichtung B₂ in Richtung auf den Riss 24 geändert wird. Um ein Bildobjekt wie den Riss 24 näher in den Blick zu nehmen, könnte gleichzeitig der Fahrwagen 2 weiter in Richtung der Längsachse X vorgefahren werden und die Kamera 8 um die Schwenkachse S₂ weiter in radiale Richtung verschwenkt werden, so dass am Ende die Blickrichtung B im Wesentlichen radial zur Längsachse X gerichtet ist. Über die Schwenkachse S₁ kann dabei die Kamera 8 in der Umfangsrichtung so verschwenkt werden, dass die Blickrichtung B auf die richtige Umfangsposition gerichtet ist, um das Bildobjekt wie den Riss 24 optimal ins Bild nehmen zu können. Darüber hinaus kann die Schwenkachse in der Blickrichtung B der Kamera 8 so verschwenkt werden, dass ein lagerichtiges Bild erhalten bleibt. Die hierzu erforderlichen Verfahr- und Schwenkbewegungen werden von der Kamerasteuereinrichtung 15 berechnet und der Fahrwagen 2, die Positioniereinrichtung 10 und die Kamera 8 so angesteuert, dass die erforderlichen Verfahr- und Schwenkbewegungen ausgeführt werden.

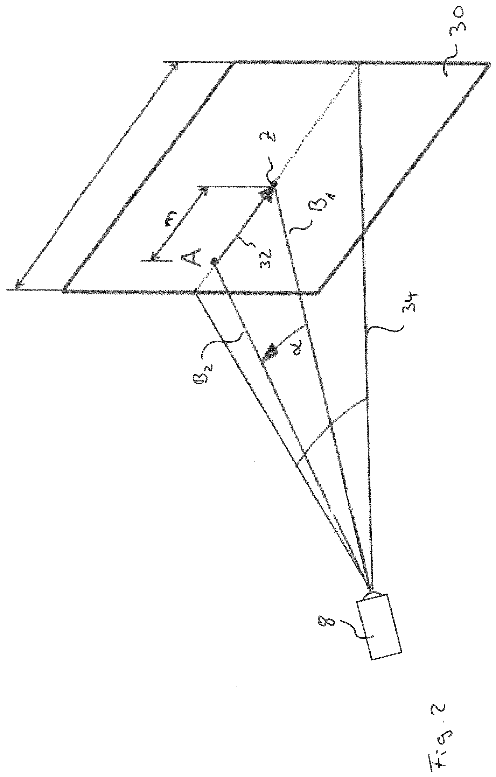

Um ein Bildobjekt, wie den Riss 24 in einen Zielbildbereich, beispielsweise in die Bildmitte des auf der Anzeigeeinrichtung 16 dargestellten Bildes zu bewegen, wird erfindungsgemäß von der Kamerasteuereinrichtung 15 ein iteratives Verfahren zum Einsatz gebracht, welches näher anhand von Figur 2 erläutert wird. Figur 2 zeigt das von der Kamera 8 in der Blickrichtung B₁ aufgenommene Bild 30. In dem Bild 30 wird vom Nutzer oder auch von der Steuereinrichtung 14 automatisiert ein näher zu betrachtendes Bildobjekt A ausgewählt, welches beispielsweise der Riss 24 oder die Einmündung 26 sein könnte. Die Auswahl kann von der Bedienperson beispielsweise unter der Verwendung der Bedienelemente 18, beispielsweise durch Verschieben eines Cursors im Bild 30 erfolgen. Alternativ oder zusätzlich könnte das Erkennen des Bildobjektes A auch automatisiert über das Bilderkennungsmodul 22 erfolgen, indem das Bilderkennungsmodul 22 automatisiert bestimmte Strukturen, wie Risse 24, erkennt und diese auswählt. Um nun das so ausgewählte und in der Kamerasteuereinrichtung 15 als ausgewählt markierte Bildobjekt A in den Zielbildbereich Z, welcher hier der Bildmitte entspricht, zu bewegen, wird wie folgt vorgegangen.

Zunächst wird das Maß m bestimmt, um welches das Bildobjekt A von dem Zielbildbereich Z beabstandet ist. Aus dem Maß m und der Richtung der Beabstandung zwischen dem Bildobjekt A und dem Zielbildbereich Z berechnet die Kamerasteuereinrichtung 15 einen Bewegungspfad 32, welcher hier eine lineare Bewegung in der Ebene des Bildes 30 darstellt. Aus diesem Bewegungspfad 32 werden von der Kamerasteuereinrichtung 15 die erforderlichen Bewegungen der Kamera 8 und des Fahrwagens 2 bestimmt, in diesem Beispiel eine Schwenkbewegung um den Winkel a um eine oder mehrere der Schwenkachsen S₁ und S₂. Der erforderliche Schwenkwinkel a kann aus einer überlagerten Schwenkbewegung um die beiden Schwenkachsen S₁ und S₂ resultieren, sofern die Bewegung entlang dem Bewegungspfad 32 nicht durch eine einzelne Schwenkbewegung erreicht werden kann. Im nächsten Schritt wird die Kamera 8 um den Winkel a durch Ansteuerung der Schwenkachsen S₁ und S₂ verschwenkt, so dass sich die Blickrichtung von der Blickrichtung B₁ in die Blickrichtung B₂ ändert, wobei die Blickrichtung B die Mittelachse des Blickfeldes 34 definiert. Im Anschluss wird in dem Bild 30 das Bildobjekt A wieder aufgefunden, wobei dies bevorzugt automatisiert durch das Bilderkennungsmodul 22 erfolgt. Durch geeignete Strukturerkennungsalgorithmen, Bildauswertung wie Featurematching und/oder künstliche Intelligenz ist es möglich, das zuvor ausgewählte Bildobjekt A in dem verschwenkten Bild wiederzufinden.

Im Anschluss wird das zuvor beschriebene Verfahren erneut ausgeführt, d. h. es wird wiederum das Maß m zwischen dem Bildobjekt A und dem Zielbildbereich Z bestimmt. Sollte dieses Maß größer als ein vorgegebener Grenzwert sein, wird wiederum ein Bewegungspfad 32 bestimmt und die Kamera 8 wieder beispielsweise um einen Winkel a verschwenkt, welcher dem berechneten Bewegungspfad 32 entspricht. Im Anschluss wird wieder das Maß m bestimmt. Dies erfolgt so lange, bis das Maß m kleiner als ein vorbestimmter Grenzwert ist. So wird durch iteratives Vorgehen das gewünschte Bildobjekt A in den Zielbildbereich Z bewegt und kann optimiert betrachtet werden. Es ist zu verstehen, dass die dazu erforderliche Bewegung der Kamera 8 nicht allein durch Verschwenken, sondern auch durch Linearbewegung des Fahrwagens 2 erfolgen kann.

Die Schwenkachsen S₁ und S₂ sowie um die Blickrichtung B können als motorisch angetriebene mechanische Schwenkantriebe ausgebildet sein. Alternativ oder zusätzlich ist es möglich, einzelne der Schwenkachsen als virtuelle Schwenkachsen zu realisieren, indem das Bild 30 einen Bildausschnitt in einem größeren von der Kamera 8 aufgenommenen Bild darstellt und lediglich der Bildausschnitt geändert wird, um die Schwenkbewegung zu simulieren. Hierzu könnte die Kamera 8 beispielsweise ein Objektiv mit einem sehr großen Blickfeld 34, beispielsweise eine Art fisheye-Objektiv aufweisen, welches Schwenkbewegungen im aufgenommenen Bild durch Veränderung des Bildausschnittes ermöglicht. Auch die Drehbewegung um die Blickrichtung B könnte durch Drehen eines Bildausschnittes 30 im Gesamtbild realisiert werden.

Der Fahrwagen 2 könnte darüber hinaus noch weitere Beobachtungs- oder Bearbeitungswerkzeuge aufweisen und das beschriebene iterative Verfahren könnte auch dazu benutzt werden, derartige Bearbeitungswerkzeuge, wie den in Figur 1 schematisch dargestellten Fräser 36, in eine gewünschte Position zu bewegen. Die Kamera 8 könnte dazu so verschwenkt werden, dass der Fräser 36 im Bild der Kamera zu sehen ist. Ferner kann die beschriebene Veränderung der Ausrichtung der Kamera 8 auch während der Bewegung des Fahrwagens 2 erfolgen, um eine Bildnachverfolgung zu realisieren, bei welcher ein Bildobjekt A, wie beispielsweise der Riss 24 in einem gewünschten Zielbildbereich, beispielsweise der Bildmitte gehalten wird, während die Kamera 8 durch Vorschubbewegung des Fahrwagens 2 in der Längsrichtung X im Kanalrohr 4 vorgeschoben wird.

### Bezugszeichenliste

- 2 -: Fahrwagen, Vorschubeinrichtung
- 4 -: Kanalrohr
- 6 -: Räder
- 8 -: Kamera
- 10 -: Positioniereinrichtung
- 12 -: Kabel
- 14 -: Steuereinrichtung
- 15 -: Kamerasteuereinrichtung
- 16 -: Anzeigeeinrichtung
- 18 -: Bedienelemente
- 22 -: Bilderkennungsmodul
- 24 -: Riss
- 26 -: Einmündung
- 28 -: Abzweig
- 30 -: Bild
- 32 -: Bewegungspfad
- 34 -: Blickfeld
- 36 -: Fräser
- A -: Bildobjekt
- B, B₁, B₂ -: Blickrichtung, Blickachse
- a -: Winkel
- m -: Maß
- S, S₁, S₂ -: Schwenkachsen
- X -: Längsachse
- Z -: Zielbildbereich

## Patentansprüche

1. Verfahren zur Steuerung eines Kanalrohrinspektionsgerätes mit einer Kamera (8) mit folgenden Schritten:
a) Auswählen eines Bildobjektes (A) in einem von der Kamera (8) im Inneren eines Kanalrohres (4) in einer ersten Blickrichtung (B₁) aufgenommenen Bildes (30),
b) Ermitteln, um welches Maß (m) das Bildobjekt (A) in dem Bild (30) von einem gewünschten Zielbildbereich (Z) entfernt ist,
c) Bestimmen zumindest eines Bewegungspfades (32), um welchen die Blickrichtung (B) der Kamera (8) ausgehend von der ersten Blickrichtung (B₁) verändert muss, und/oder zumindest eines Bewegungspfades, um welchen das Bildobjekt (A) bewegt werden muss, um das Bildobjekt (A) in den Zielbildbereich (Z) zu bewegen,
d) Verändern der Blickrichtung (B) zu einer zweiten Blickrichtung (B₂), wobei die Blickrichtung (B) ausgehend von der ersten Blickrichtung (B₁) um den bestimmten Bewegungspfad (32) verändert wird, und/oder Bewegen des Bildobjektes (A) um den bestimmten Bewegungspfad,
e) Wiederauffinden des Bildobjektes (A) in einem erneut aufgenommenen Bild (30),
f) Wiederholen der Schritte b) bis e) bis das Maß (m), um welches das Bildobjekt (A) von dem Zielbildbereich (Z) entfernt ist, einen vorbestimmten Grenzwert unterschreitet.

2. Verfahren nach Anspruch 1, bei welchem das Maß (m) ein Abstand in Pixeln oder ein Winkel zwischen der Blickrichtung, in welcher das Bildobjekt (A) gelegen ist, und der Blickrichtung ist, in welcher der Zielbildbereich (Z) gelegen ist.

3. Verfahren nach Anspruch 1 oder 2, bei welchem der Bewegungspfad (32) als eine Strecke oder zumindest ein Schwenkwinkel (a) definiert wird.

4. Verfahren nach einem der vorangehenden Ansprüche, bei welchem die Blickrichtung (B) durch Verschwenken der Kamera (8) oder durch Verändern eines Ausschnittes in einem von der Kamera (8) erfassen Gesamtbild verändert wird.

5. Verfahren nach einem der vorangehenden Ansprüche, bei welchem das Bildobjekt (A) durch manuelles Markieren in einem Bild (30) ausgewählt wird oder das Auswählen des Bildobjektes (A) automatisch durch Erkennen einer vorgegebenen Bildstruktur erfolgt.

6. Verfahren nach einem der vorangehenden Ansprüche, bei welchem das Auffinden und/oder Wiederauffinden des Bildobjektes (A) automatisiert durch Bildauswertung, beispielsweise Featurematching, Object-Tracking und/oder zumindest ein Verfahren künstlicher Intelligenz erfolgt.

7. Verfahren nach einem der vorangehenden Ansprüche, bei welchem die Kamera (8) an einer Vorschubeinrichtung (2) angeordnet ist, wobei zum Verändern der Blickrichtung (B) zumindest ein Teil der Vorschubeinrichtung (2) bewegt wird.

8. Verfahren nach einem der vorangehenden Ansprüche, bei welchem die Kamera (8) an einer Positioniereinrichtung (10) angebracht ist, mittels welcher sich die Blickrichtung (B) der Kamera (8) um zumindest eine, vorzugsweise zwei oder drei Schwenkachsen (S) verändern lässt, wobei vorzugsweise eine oder zwei Schwenkachsen (S) normal zur Blickachse (B) der Kamera und/oder zumindest zwei Schwenkachsen (S) normal zueinander gerichtet sind, wobei vorzugsweise zumindest eine Schwenkachse entlang der Blickachse (B) der Kamera (8) gerichtet ist.

9. Verfahren nach Anspruch 8, bei welchem zumindest eine der Schwenkachsen eine virtuelle Schwenkachse ist, welche durch eine Veränderbarkeit eines Ausschnittes aus einem Gesamtbild realisiert ist.

10. Verfahren nach einem der vorangehenden Ansprüche, bei welchem die Kamera (8) mittels einer Vorschubeinrichtung (2) bewegt wird und die Schritte a) bis f) während der Bewegung durch die Vorschubeinrichtung (2) ausgeführt werden.

11. Kanalrohrinspektionsgerät mit einer Vorschubeinrichtung (2) und einer an dieser angeordneten Kamera (8) mit einer veränderbaren Blickrichtung (B) sowie zumindest einer Steuereinrichtung, welche zur Ausführung eines Verfahrens nach einem der Ansprüche 1 bis 10 ausgebildet ist.

12. Kanalrohrinspektionsgerät nach Anspruch 11, bei welchem die Steuereinrichtung (15) zumindest eine Anzeigeeinrichtung (16) aufweist, welche ein von der Kamera (8) aufgenommenes Bild (30) anzeigt.

13. Kanalrohrinspektionsgerät nach Anspruch 11 oder 12, bei welchem die Steuereinrichtung (15) eine Eingabevorrichtung (18) und/oder ein Bilderkennungsmodul (22) aufweist, welche die Auswahl eines Bildobjektes (A) ermöglichen.

14. Kanalrohrinspektionssystem nach einem der Ansprüche 11 bis 13, bei welchem die Kamera (8) zumindest zwei, vorzugsweise zumindest drei Schwenkachsen (S) aufweist, um welche das von der Kamera (8) aufgenommene Bild (30) schwenkbar ist, wobei vorzugsweise die Steuereinrichtung (15) derart ausgestaltet ist, dass zumindest eine der Schwenkachsen (S) als virtuelle Schwenkachse realisiert ist.

15. Kanalrohrinspektionssystem nach einem der Ansprüche 11 bis 14, bei welchem die Kamera (8) an einer Positioniereinrichtung (10) angebracht ist, wobei die Positioniereinrichtung (10) zumindest eine Schwenkachse (S) mit einem von der Steuereinrichtung (15) ansteuerbaren Schwenkantrieb aufweist.
